(19) Europäisches Patentamt

European Patent Office

Office européen des brevets

(11) EP 1 600 729 A2

(12) **DEMANDE DE BREVET EUROPEEN**

(43) Date de publication:
30.11.2005 Bulletin 2005/48

(51) Int Cl.$^7$: **G01B 5/08**

(21) Numéro de dépôt: 05290992.6

(22) Date de dépôt: 09.05.2005

(84) Etats contractants désignés:
AT BE BG CH CY CZ DE DK EE ES FI FR GB GR
HU IE IS IT LI LT LU MC NL PL PT RO SE SI SK TR
Etats d'extension désignés:
AL BA HR LV MK YU

(30) Priorité: 24.05.2004 FR 0405573

(71) Demandeur: Carossino, André
F-78430 Louveciennes (FR)

(72) Inventeur: Carossino, André
F-78430 Louveciennes (FR)

(54) **Instrument pour mesurer le rayon de courbure de pieces convexes de diametres differents**

(57)     L'instrument de mesure est caractérisé en ce qu'il est constitué d'un berceau formé de deux ailes planes homothétiques ($2_1$, $2_2$) définissant entre elles un angle d'appui, d'ouverture prédéterminée, dont le sommet est prolongé par un corps tubulaire (1), situé dans la bissectrice de cet angle et dans lequel est monté un plongeur (5), mobile en rotation et en translation axiale dans une plage délimitée par une butée fin de course (8), ce plongeur étant solidaire d'un cadran (12) gradué se déplaçant en rotation par rapport à un index de lecture (13) figurant sur une collerette fixe (14) prolongeant le corps tubulaire (1).

Fig: 1

EP 1 600 729 A2

## Description

L'invention concerne un instrument de mesure pour le relevé du rayon de courbure d'une surface convexe, par exemple, d'une pièce cylindrique dont le diamètre est trop important pour pouvoir être lu par les instruments de mesure traditionnels, que sont le pied à coulisse ou le palmer par exemple, ou encore dont le diamètre est inaccessible à de tels instruments.

Les instruments classiques, que sont précisément le pied à coulisse et le palmer, indiquent des mesures en valeur linéaire, en relation avec le déplacement d'un curseur coulissant, correspondant à des valeurs réelles. Leur encombrement est donc en rapport avec leur capacité, de sorte que, par expérience, on sait qu'un pied à coulisse ne peut pas être utilisé pour des diamètres allant au-delà de 130 mm, ses branches étant trop courtes pour pouvoir couvrir le diamètre de tels cylindres. D'autres instruments beaucoup plus importants existent, mais sont très onéreux.

Le palmer ne permet pas de pallier ces difficultés, sauf à faire appel à un instrument très élaboré, d'usage et d'installation particulièrement délicats.

Le micromètre, instrument également bien connu, a une course usuelle de 10 mm. Il est généralement constitué d'un cadran, au centre duquel tournoie une aiguille qui permet de lire la mesure au centième de millimètre près.

Toutefois, un déplacement de la touche sur 10 mm entraîne la rotation de 10 tours de l'aiguille, le déplacement du curseur étant linéaire et étant transformé en mouvement de rotation à l'aide d'un renvoi de pignons.

Il est avéré qu'aucun de ces instruments connus ne peut être utilisé pour le relevé de grands diamètres ou encore et surtout à la mesure du rayon d'une pièce cylindrique dont l'arc de cercle visible ou accessible est inférieur à 180 degrés.

En d'autres termes, il n'existe pas à ce jour de méthode et d'appareil fiables permettant de déterminer le rayon d'une surface curviligne en majeure partie physiquement inaccessible.

L'invention concerne donc un instrument de mesure pour le relevé du rayon de courbure de pièces convexes de grand diamètre ou en majeure partie masquées, caractérisé en ce qu'il est constitué d'un berceau formé de deux ailes homothétiques, définissant entre elles un angle d'appui dont le sommet est prolongé par un corps tubulaire dans lequel est monté un piston-plongeur, (dénommé ci-après plongeur), mobile en rotation et en translation axiale, dans une plage délimitée par une butée de fin de course, ce plongeur étant solidaire d'un cadran étalonné se déplaçant en rotation par rapport à un index de lecture figurant sur une collerette fixe, prolongeant le corps tubulaire.

Suivant mode de réalisation, le corps tubulaire comporte un épaulement annulaire qui reçoit une collerette fixe, les deux éléments étant assemblés l'un à l'autre, suivant une position angulaire relative, par une vis de serrage axial dont l'extrémité vient se loger dans une rainure périphérique de l'embout du corps tubulaire.

Suivant une caractéristique avantageuse de l'invention, le plongeur est constitué d'une partie filetée, dont le filet coopère avec un pion de guidage, la butée fin de course de ce plongeur étant en prise avec une gorge annulaire se situant au-dessus de la partie filetée.

D'autres caractéristiques et avantages ressortiront de la description ci-après les dessins annexés dans lesquels :

- la figure 1 est une vue en coupe axiale de l'instrument de mesure selon l'invention,
- la figure 2 est une vue de dessus de la figure 1,
- la figure 3 est une vue en plan illustrant la méthode destinée à déterminer les paramètres de l'instrument de mesure.

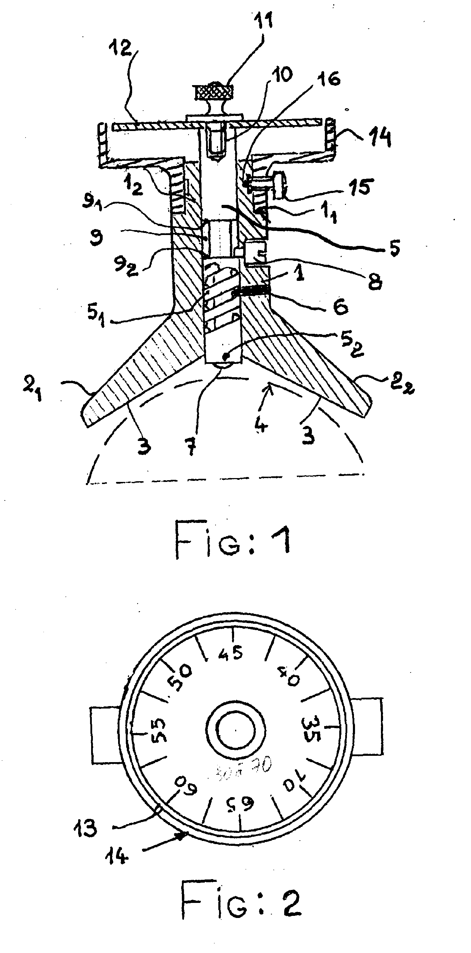

Comme visible sur la figure 1, l'instrument selon l'invention est constitué d'un corps tubulaire 1 de forme cylindrique dont la base se termine par un berceau formé de deux ailes homothétiques divergentes $2_1$ - $2_2$ définissant un angle dont la bissectrice est formée par le corps tubulaire 1.

Ces deux ailes symétriques présentent une surface de contact 3 rigoureusement plane, celle-ci étant destinée à venir en appui sur la surface curviligne 4 de la pièce dont on veut mesurer le rayon, et par voie de conséquence le diamètre.

Le corps tubulaire 1 sert de guidage a un piston plongeur 5, mobile en rotation et en translation axiale sous l'effet d'une partie filetée $5_1$ coopérant avec un pion radial fixe 6, traversant le corps tubulaire, et venant s'insérer dans le filet de la partie filetée du plongeur.

Ainsi, le mouvement de rotation du plongeur se transforme en un mouvement de translation permettant d'amener l'extrémité frontale de ce piston en contact tangentiel avec les génératrices de la surface curviligne 4.

Afin de parfaire ce contact, cette extrémité $5_2$ du plongeur est pourvue d'une bille sertie 7 permettant un contact fin avec la pièce à mesurer.

La course du plongeur est déterminée par une butée fin de course 8 traversant radialement le corps tubulaire de l'instrument et venant se ficher dans une gorge annulaire 9 usinée sur le corps du plongeur, cette butée venant alternativement en contact avec l'un ou l'autre épaulement annulaire $9_1$, $9_2$ de la gorge 9.

L'autre extrémité du plongeur est pourvue d'un orifice taraudé 10 dans lequel est vissé un bouton moleté 11 emprisonnant un cadran étalonné 12, solidaire en rotation du plongeur.

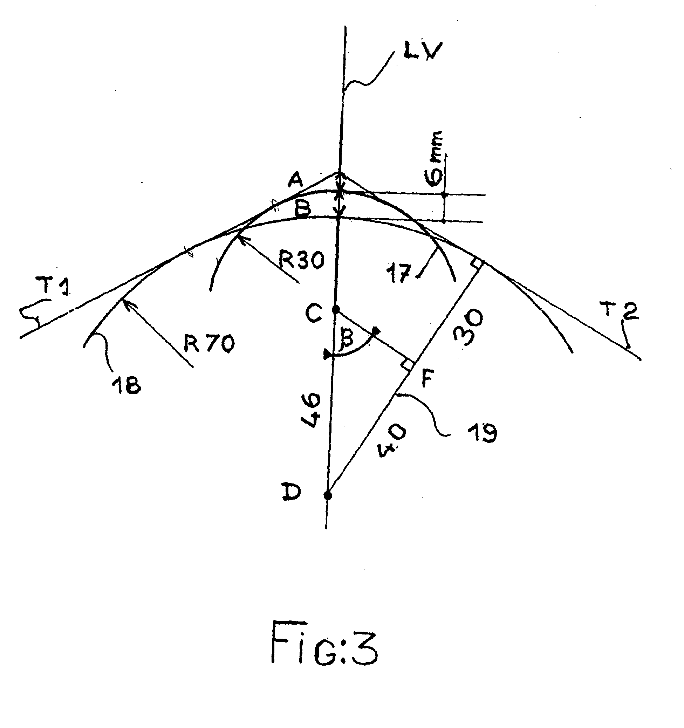

Ce cadran est mobile en rotation, par rapport à un index 13 (fig. 2), figurant sur une collerette réglable 14 prolongeant le corps tubulaire 1.

Le pied de cette collerette est assemblé au corps tubulaire qui comporte, à cet effet, un épaulement

annulaire $1_1$ définissant un embout de diamètre réduit $1_2$, cet épaulement étant d'une largeur correspondant à l'épaisseur du pied de la collerette 14.

L'assemblage du corps et de la collerette s'effectue par simple emmanchement et leur solidarisation, en toutes positions relatives, est assurée par une vis de blocage 15 qui vient se loger radialement dans une rainure périphérique 16 ménagée dans l'embout $1_2$.

Pour étalonner le dispositif, avant usage, l'opérateur libère la rotation de la collerette (en dévissant la vis 15) puis applique l'instrument par ses deux ailes $2_1$, $2_2$, sur la pièce étalon 4 (dont le diamètre correspond, en l'espèce, au seuil inférieur de l'échelle graduée sur le cadran) puis fait pivoter la collerette pour amener son index 13 en regard de la graduation correspondant au diamètre de l'étalon. Il resserre ensuite la vis 15 pour solidariser de nouveau la collerette 14 et le corps tubulaire 1.

L'appareil est alors prêt à être utilisé pour la lecture du rayon de pièces convexes, même si l'arc visible ou accessible n'est que de 60°, par exemple.

L'avantage de cet appareil est d'être d'une construction simple et peu fragile, l'ensemble des éléments participant à la mesure étant masqué et protégé par le corps tubulaire en métal.

De plus, son maniement est extrêmement aisé, puisqu'il suffit de venir placer les deux ailes du berceau de l'instrument sur la surface connexe, puis de faire tourner à la main le cadran gradué 12 à l'aide du bouton moleté 11 pour déplacer en rotation, puis en translation, le plongeur 5 jusqu'à ce que sa bille 7 vienne au contact de la surface convexe 4. Il suffit alors de lire sur le cadran la graduation en regard de l'index 13 de la collerette 14 pour avoir une mesure immédiate et précise du rayon de courbure de la pièce 4.

Le maniement est donc d'une grande facilité et la mesure lisible sans effort et sans aucune interprétation ou extrapolation.

La précision de la mesure est de plus ou moins 0,1 mm du rayon de l'arc, soit plus ou moins 0,2 mm du diamètre.

Ce dispositif est appelé à rendre de multiples services aussi bien dans les ateliers de mécanique que dans les industries de moulage, les laboratoires, les locaux de contrôle ou encore lors de la réhabilitation de pièces défectueuses ou détériorées dont il était, jusqu'ici, difficile de pouvoir connaître le diamètre sans procéder à de fastidieux et longs démontages.

Il est à noter à ce sujet que si le déplacement du plongeur est très faible, il permet, en revanche, de multiplier d'une façon importante les capacités de mesure de l'appareil, puisqu'à la course de 6 mm dudit plongeur, correspond un rayon de pièce de 40 mm.

Le corps tubulaire 1 peut être d'une longueur plus ou moins grande, notamment pour permettre le contrôle de pièces difficilement accessibles, jusqu'alors réputées incontrôlables à l'aide de pieds à coulisse ou palmers.

L'ouverture de l'angle défini par les deux ailes $2_1$, $2_2$ du berceau, peut être déterminé selon plusieurs méthodes de calcul et celle décrite ci-après n'est donnée qu'à titre d'exemple non limitatif.

La méthode illustrée en figure 3 concerne un instrument de mesure capable d'effectuer le relevé de surfaces curvilignes ayant un rayon allant de 30 à 70 mm.

Partant de cet exemple, le cadran 12 solidaire du plongeur, sera donc subdivisé selon une graduation correspond à cette échelle et l'index 13 de la collerette 14 amené en regard de la graduation 30, seuil inférieur de l'échelle.

En partant du principe qu'un tour complet du cadran gradué, par rapport à l'index fixe 13, correspond à un tour de vis, et que le pas de la partie filetée du plongeur est de 6 mm, on détermine l'angle d'ouverture du berceau en procédant aux étapes suivantes :

- on trace un arc de cercle 17 d'un rayon de 30 mm, par exemple sur 120 degrés, puis on trace une ligne verticale LV passant par le centre C de ce rayon et coupant cet arc 17 en A puis on descend ce point A à un point B, distant de 6 mm, correspondant au pas du plongeur, après quoi on reporte sur cette droite, depuis le point B, un second rayon 18 de 70 mm correspondant au seuil supérieur de l'échelle graduée du cadran,

- on trace alors une tangente T1 et T2 aux arcs de cercle 17, 18 (R30 et R70) en prenant soin de faire en sorte que ces deux tangentes soient symétriques et se croisent sur la droite LV,

- on trace ensuite, à partir du point D, correspondant au centre du rayon 18, une perpendiculaire 19 à l'une des deux tangentes T1 ou T2 pour définir un triangle rectangle CFD dont l'hypoténuse CD est de 46 mm et le grand côté 40 mm,

- on calcule alors le sinus de l'angle β pour déterminer la valeur de cet angle qui doublé, correspondra à l'angle du V du berceau.

On observe en effet les valeurs suivantes :

- DF=70-30=40
- BC = 30 - 6 =24
- CD = 70 - BC, soit : 70 - 24 = 46
- Sinus β = $\frac{40}{46}$ = 0,8695
- soit en interprétant la la table des sinus :

$$- \text{sinus} : 60° \ 30 \ \text{mm} = 0{,}8704$$
$$- \text{sinus} : 60° \ 20 \ \text{mm} = 0{,}8689$$
$$\text{---------}$$
$$- \text{différence} : \qquad\qquad 15$$

ce qui revient à la formule suivante :

$$0{,}8704$$
$$- 0{,}8695$$
$$\text{---------}$$
$$0{,}0009$$

soit encore : $60° \ 30' - 60° \ 20' = \frac{10' \times 9}{15} = \frac{90}{15} = 6'$

D'où comme résultat le plus proche : 60° 30' - 6' = 60° 24', ce qui correspond à un angle β de 60° 24', donc un angle du V du berceau de 120 ° 48'.

Cet angle de 120°48', traduit en valeur décimale, donne un angle de 120°8, soit : $\frac{48'}{60'} = 0{,}8$, ce qui signifie que 120° 48' est égale, en décimal, à 120°8.

Il est évident que l'on peut accroître la précision de l'instrument en réduisant l'angle d'ouverture du berceau ou en modifiant le pas du filetage du plongeur 5.

Bien entendu, cette méthode de calcul de l'angle du V du berceau peut être remplacée par tout autre système d'étalonnage, de même que l'on pourra prévoir d'autres instruments pour des diamètres plus importants, selon une autre graduation.

## Revendications

1. Instrument pour mesurer le rayon de courbure de pièces convexes de diamètres différents **caractérisé en ce qu'**il est constitué d'un berceau formé de deux ailes planes homothétiques ($2_1$, $2_2$) définissant entre elles un angle d'appui, d'ouverture prédéterminé, dont le sommet est prolongé par un corps tubulaire (1) situé dans la bissectrice de cet angle, et dans lequel est monté un plongeur (5), mobile en rotation et en translation axiale dans une plage délimitée par une butée fin de course (8), ce plongeur étant solidaire d'un cadran gradué (12) se déplaçant en rotation par rapport à un index de lecture (13) figurant sur une collerette fixe (14) prolongeant le corps tubulaire (1).

2. Instrument de mesure selon la revendication 1 **caractérisé en ce que** le corps tubulaire (1) comporte un épaulement annulaire ($1_1$) sur lequel est emmanché le pied de la collerette (14), les deux éléments étant assemblés l'un à l'autre, suivant toutes positions angulaires relatives, par une vis de serrage axiale (15) dont l'extrémité vient se loger dans une rainure périphérique (16) de l'embout ($1_2$) du corps tubulaire (1).

3. Instrument de mesure selon la revendication 1 **caractérisé en ce que** le plongeur est constitué d'une partie filetée ($5_1$), dont le pas est en relation avec la course dudit plongeur, cette partie filetée coopérant avec un pion de guidage fixe (6).

4. Instrument de mesure selon la revendication 1 **caractérisé en ce que** la butée de fin de course (8) du plongeur est en prise avec une gorge annulaire (9), située au-dessus de la partie fileté ($5_1$).

5. Instrument de mesure selon l'une quelconque des revendications de 1 à 4 **caractérisé en ce que** la butée de fin de course (8) est constituée d'une vis engagée radialement dans un orifice traversant le corps tubulaire (1) et dont l'extrémité débouche dans la gorge annulaire du plongeur (9).

6. Instrument de mesure selon l'une quelconque des revendications de 1 à 5 **caractérisé en ce que** la vis de serrage axiale (15) assurant l'assemblage, en toutes positions angulaires relatives, du corps tubulaire (1) et de la collerette (14) est engagée dans un orifice taraudé traversant radialement le pied de ladite collerette et dont l'extrémité libre débouche dans la rainure périphérique (16), creusée dans l'embout ($1_2$) du corps tubulaire (1).

7. Instrument de mesure selon l'une quelconque des revendications de 1 à 6 **caractérisé en ce que** le plongeur (5) comporte à une de ses extrémités un orifice axial borgne dans lequel vient se loger un organe de fixation (11) du cadran gradué (12), solidaire en rotation dudit plongeur et à son autre extrémité frontale ($5_2$) une bille de palpage (7) sertie.

EP 1 600 729 A2

Fig: 1

Fig: 2

Fig:3